# EUROPÄISCHE PATENTANMELDUNG

(11) **EP 1 675 044 A1**
(43) Veröffentlichungstag der Anmeldung: **28.06.2006**
(21) Anmeldenummer: 04030321.6
(22) Anmeldetag: 21.12.2004
(51) Int. Cl.: G06Q 10/00

(54) **Engineering-System für verteilte Entwicklung und Entwicklung durch mehrere Nutzer**

(71) Anmelder: SIEMENS AKTIENGESELLSCHAFT, 80333 München (DE)
(72) Erfinder: Gikas, Diamantis, 90473 Nürnberg (DE); Lange, Ronald, 90766 Fürth (DE); Leins, Ralf, 75228 Ispringen (DE); Meusser, Klaus, 90768 Fürth (DE); Schmoll, Jürgen, 91801 Markt Berolzheim (DE); Weinländer, Markus, 91230 Happurg (DE)

(57) **Zusammenfassung**

Die Erfindung betrifft ein System und ein Verfahren zum Bearbeiten von Projekten, insbesondere von Engineering-Projekten im Automatisierungsumfeld, mit dessen Hilfe Teile von Projekten ausgegliedert und unabhängig voneinander bearbeitet werden können, wobei anschließend eine nahtlose Integration in das Hauptprojekt ohne weiteren Anpassungsaufwand erfolgt. Hierdurch kann im Umfeld größerer Projekte parallel an verschiedenen Teilprojekten gearbeitet werden und die Teilprojekte können unabhängig voneinander weiter entwickelt werden.

## Beschreibung

Engineering-System für verteilte Entwicklung und Entwicklung durch mehere Nutzer

Die Erfindung betrifft ein System und ein Verfahren zum Bearbeiten von Projekten, insbesondere von Engineering-Projekten im Automatisierungsumfeld.

Heutzutage werden Engineering-Projekte, insbesondere im Automatisierungsumfeld in der Regel in mehrere Teilprojekte aufgeteilt. Hierbei arbeiten an den Teilprojekten u.U. verschiedene unternehmerische Einheiten oder viele verschiedene Entwickler. Daher handelt es sich bei einer verteilten Entwicklung bzw. bei einem verteilten Engineering-Projekt um ein heutzutage gängiges Szenario im Automatisierungsumfeld. Aus diesem Grund ist es wünschenswert, wenn die Möglichkeit gegeben ist, dass beispielsweise sehr große Projekte in kleinerer Einheiten unterteilt werden können, um die Effektivität der einzelnen Einheiten und damit die des Gesamtprojekts zu steigern. Hierbei müssen die unterteilten Teilprojekte bezüglich ihrer parallel laufenden Entwicklungen synchronisiert werden. Nach Beendigung der jeweiligen Teilprojekte müssen die einzelnen fertig gestellten Teile wieder zusammengespielt werden.

Desgleichen wird im Rahmen einer Entwicklung häufig ein Teilprojekt an einen Subunternehmer zur Entwicklung abgegeben. Eine Gruppe von Entwicklern wird dementsprechend Teile einer Automatisierungslösung, beispielsweise eine Maschine mehr oder weniger unabhängig von anderen Entwicklern realisieren. Auch in diesem Fall muss anschließend für eine nahtlose Eingliederung der entsprechenden Teilprojekte in das Gesamtprojekt gesorgt werden.

Eine weitere Tätigkeit, bei der lediglich Teilprojekte einer Gesamtlösung relevant sind, ist beispielsweise im Umfeld des lokalen Tests zu sehen. Ein Entwickler macht im Rahmen seiner Tätigkeit Änderungen an einem Teilprojekt und das entsprechende Teilprojekt wird für sich geändert und getestet ohne dass das Gesamtprojekt gestört wird. Auch in diesem Fall muss nach Beendigung der Tätigkeit das getestete bzw. geänderte Teilprojekt mit dem Gesamtprojekt wieder verschmolzen werden.

Eine weitere Anforderung an heutige Entwicklungsprojekte ist die Tatsache, dass Teile von Projekte oder Projekten wieder verwendet werden. Hierzu werden Teile aus einem existierenden Projekt herausgenommen und in neuen Anwendungen, beispielsweise eingebaut.

All diese Szenarien erfordern ein Ausgliedern von bestimmten Teilen eines Projektes und die Möglichkeit die ausgegliederten Teilprojekte unabhängig voneinander weiter zu bearbeiten. Eine nahtlose Eingliederung bzw. ein Einfügen in das Hauptprojekt nach Beendigung der Bearbeitung ist in diesen Fällen notwendig. Heutzutage wird die Synchronisation der parallel zu entwickelnden Teilprojekte mit Hilfe von fest definierten Schnittstellen, welche nicht verändert werden dürfen, in der Regel durch Absprache realisiert.

Die Aufgabe der vorliegenden Erfindung besteht daher darin, ein System und ein Verfahren anzugeben, mit dessen Hilfe Teile von Projekten ausgegliedert und unabhängig voneinander bearbeitet werden können, wobei anschließend eine nahtlose Integration in das Hauptprojekt ohne weiteren Anpassungsaufwand erfolgen soll.

Die Aufgabe wird gelöst durch ein System zum Bearbeiten von Projekten, insbesondere von Engineering-Projekten im Automatisierungsumfeld, mit einem ersten Exemplar einer Projektierumgebung zur Bearbeitung eines Projekts, insbesondere eines Hauptprojekts, ersten Mitteln zum Erstellen (mindestens) einer Kopie von Objekten aus dem Projekt, mindestens einem zweiten Exemplar einer Projektierumgebung zur Bearbeitung mindestens eines Teilprojekts, wobei das Teilprojekt die Kopie der Objekte aus dem Projekt umfasst und zweiten Mitteln zum Wiedereinfügen der im Teilprojekt bearbeiteten Objekte in das Projekt.

Der Erfindung liegt die Erkenntnis zugrunde, dass größere Projekte in kleinere Teilprojekte oder Unterprojekte durch eine Funktion, welche die Teilung übernimmt aufgeteilt werden können. Unabhängig voneinander können anschließend die Teilprojekte bearbeitet werden und anschließend nach Beendigung der Bearbeitung werden die Teilprojekte durch eine weitere Funktion wieder miteinander verschmolzen bzw. kombiniert. Hierdurch kann im Umfeld größerer Projekte parallel an verschiedenen Teilprojekten gearbeitet werden und die Teilprojekte können unabhängig voneinander weiter entwickelt werden.

Die Teilprojekte werden derart generiert, dass aus einem Hauptprojekt ein Teilprojekt ausgegliedert wird dadurch, dass beispielsweise verschiedene Objekte aus dem Hauptprojekt ausgewählt und kopiert werden. Im Hauptprojekt sind diese Objekte anschließend für eine weitere Bearbeitung blockiert. Nicht ausgewählte Objekte im Hauptprojekt können jedoch weiterhin bearbeitet werden. Die kopierten Objekte, welche anschließend in einem Teilprojekt weiter bearbeitet werden können, weisen nachdem das Kopieren durchgeführt ist, eine volle Bearbeitungsfähigkeit auf. Sie können entsprechend verändert werden.

Hierbei werden jedoch relevante Schnittstellen zu Objekten, welche im Hauptprojekt verblieben sind, nicht im Rahmen des Teilprojekts veränderbar sein. Es können nur solche Änderungen durchgeführt werden, die innerhalb des Teilprojekts liegen. Alles was Konsequenzen für andere, nicht im Teilprojekt vorhandene Objekte hat, und eine entsprechende Änderung dieser Objekte zur Folge haben wird, darf im Rahmen des Teilprojekts nicht geändert werden.

Zusätzlich zu den in das Teilprojekt kopierten Objekten stehen im Rahmen des Teilprojekts auch weitere Objekte oder Informationen, beispielsweise Bibliotheken, welche für die Entwicklungstätigkeit relevant sind, zur Verfügung. Diese weiteren Objekte oder Informationen können im Rahmen des Teilprojekts ebenfalls nicht verändert werden. Sie sind auf "Read only" gesetzt.

Nachdem im Teilprojekt oder in mehreren Teilprojekten unabhängig voneinander eine Bearbeitung erfolgt ist, können die Teilprojekte in das ursprüngliche Hauptprojekt wieder reibungslos integriert werden. Dies wird durch eine weitere Funktion, welche im Rahmen der Projektierumgebung zur Verfügung steht, ermöglicht. Die Rekombination erfolgt reibungslos, da die Objekte im Hauptprojekt nicht verändert wurden, also keine zwei verschiedenen Versionen des Teilprojektes vorliegen. Außerdem sind die Schnittstellen der Objekte des Teilprojekts, welche nach außen hin relevant sind ebenfalls nicht verändert worden, so dass eine nahtlose Integration in das Hauptprojekt ermöglicht wird.

Die vorliegende Erfindung ermöglicht durch die Ausgliederung und das anschließende Rekombinieren unterschiedlich großer Teilprojekte in unterschiedlicher Anzahl eine verteilte Projektstruktur im Rahmen von großen Entwicklungsprojekten. Des Weiteren ermöglicht sie völlig unabhängige Bearbeitung von einzelnen Teilprojekten oder auch die Durchführung von Tests und die Ausführung entsprechender Änderungen nach Durchführung des Tests unabhängig voneinander. Mit Hilfe der vorliegenden Erfindung wird somit im Automatisierungsumfeld das Engineering großer Automatisierungslösungen erheblich erleichtert.

Vorteilhaft ist auch, dass die Größe der Teilprojekte bzw. deren Auswahl im Rahmen der Projektierumgebung durch den Benutzer ermöglicht wird. Der Benutzer hat beispielsweise eine Liste sämtlicher relevanter Objekte und kann in dieser Liste angeben, welche Objekte den für ein Teilprojekt kopiert werden sollen und im entsprechenden Hauptprojekt dann für die Bearbeitung blockiert sein sollen. Hierdurch ist die Ausgliederung von Teilprojekten durch die entsprechenden Entwickler frei skalierbar. Es können unterschiedliche Selektionskriterien für die Ausgliederung von Teilprojekten angelegt werden. Beispielsweise können Teilprojekte auf Basis des Projektbaumes selektiert werden oder auch bestimmte Objekte einfach bestimmten Entwicklern zugewiesen werden, wenn diese besonderes Knowhow im Rahmen der Realisierung einer Automatisierungslösung für diese Objekte aufweisen. Weitere Kriterien für die Aufteilung eines Hauptprojekts in verschiedene Teilprojekte sind denkbar.

Wenn eine anschließende Eingliederung in das Hauptprojekt nicht notwendig ist oder gewünscht wird, wenn beispielsweise lediglich ein bereits existierendes Teilprojekt für die Verwendung im Rahmen einer anderen Applikation oder eines anderen Projektes vorgesehen ist, so ist ebenfalls möglich, dass die zusätzlichen Objekte oder Informationen, beispielsweise eine Bibliothek von Funktionsbausteinen, die dem Teilprojekt mitgegeben werden, auch bearbeitbar ist. In diesem Fall besteht nicht die Notwendigkeit, die Schnittstellen zu den Objekten des Hauptprojekts statisch zu halten und eine Veränderung zu unterbinden. In diesem Fall ist die erstellte Kopie, die im Rahmen des Teilprojekts weiterbearbeitet werden kann, frei editierbar.

Eine weitere vorteilhafte Ausbildung der Erfindung besteht darin, dass ein bearbeitbares Teilprojekt noch weiter unterteilt werden kann. Hierdurch kann insbesondere bei großen Projekten eine baumstrukturartige Untergliederung eines Hauptprojekts in Teilprojekte auf verschiedene Hierarchien erfolgen. Die nochmalige Untergliederung eines Teilprojekts ist derart realisiert, dass die aus dem Teilprojekt herauskopierten Objekte im Teilprojekt wiederum nicht editierbar sind, während sie in dem "Unter"-Teilprojekt bearbeitbar sind. Hierdurch wird eine Kaskade von bearbeitbaren Einheiten im Rahmen einer Automatisierungslösung generierbar, welche eine parallele Weiterentwicklung der Automatisierungslösung ermöglicht und gleichzeitig eine reibungslose Integration der einzelnen Arbeitspakete ineinander sicherstellt.

Weitere vorteilhafte Ausbildungen der Erfindung sind in den Unteransprüchen angegeben.

Im Folgenden wird die Erfindung anhand der in den Figuren dargestellten Ausführungsbeispiele näher beschrieben und erläutert.

Es zeigen:
- FIG 1: eine schematische Darstellung des Systems zum Bearbeiten unterschiedlicher Teilprojekte,
- FIG 2: einen Arbeitsablauf, bei dem ein Subunternehmer ein Teilprojekt bearbeitet,
- FIG 3: eine schematische Darstellung eines Szenarios bei dem ein Teilprojekt wieder verwendet wird,
- FIG 4: eine schematische Darstellung der Bearbeitung eines Teilprojekts im Rahmen eines großen Projektes,
- FIG 5: ein Szenario, bei dem ein Teilprojekt lokal getestet wird.

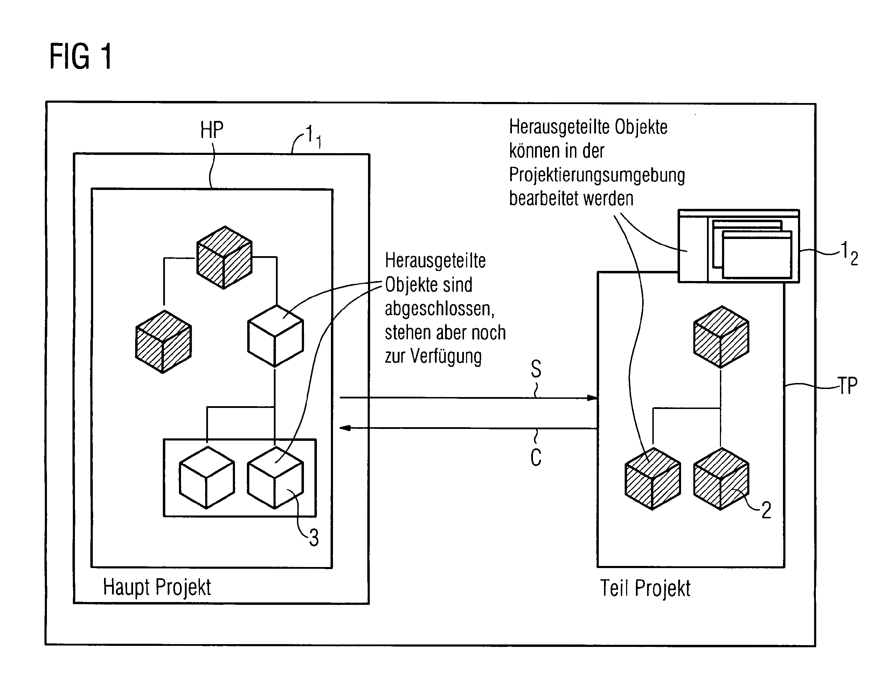

FIG 1 stellt ein System zur Bearbeitung von Projekten durch Zerteilung und anschließende Kombinierung (Split & Combine) dar. Im Rahmen des Systems wird einer ersten Projektierumgebung 1₁ ein Hauptprojekt HP bearbeitet. Durch eine Funktion wird aus dem Hauptprojekt HP heraus ein Teilprojekt generiert. Die Funktion wird hierbei realisiert aus den ersten Mitteln S (Split Funktion) zum Erstellen einer Kopie von Objekten 2. Die Objekte 2 werden in einem Teilprojekt TP mit einem zweiten Exemplar einer Projektierumgebung 1₂ bearbeitet. Hierbei können in mehreren Exemplaren der Projektumgebung mehrere Teilprojekte unabhängig voneinander bearbeitet werden, auch wenn dies in FIG 1 lediglich für ein Teilprojekt dargestellt ist.

Im Hauptprojekt HP verbleiben die kopierten Objekte in Form von Ursprungsobjekten 3. Diese Objekte sind im Rahmen des Hauptprojekts zwar lesbar aber sie sind quasi verschlossen und somit nicht editierbar für Entwickler, die im Rahmen des Hauptprojektes arbeiten. Im Teilprojekt TP liegt die Kopie der Objekte 2 vor. Diese Objekte sind für die Entwickler, die im Rahmen des Teilprojekts TP tätig werden, bearbeitbar. Nach Fertigstellung der Bearbeitung des Teilprojekts TP kann mittels einer weiteren Funktion eine Rekombination des Teilprojekts TP in das Hauptprojekt HP erfolgen. Hierzu erfolgt das System über die zweiten Mittel C (Combine Funktion) zum Wiedereinfügen der im Teilprojekt TP bearbeiteten Objekte in das Hauptprojekt.

Ein Projekt kann hierbei beispielsweise folgendermaßen aus dem Hauptprojekt ausgegliedert werden: Im Rahmen des Systems existiert eine Funktion "File > Safe subproject". Im Rahmen dieser Funktion wird dem Benutzer ein Dialog angeboten, welcher eine Auswahl des Teilprojekts anbietet, dass herausgeschickt werden soll. Hierbei kann der Benutzer beispielsweise die einzelnen Objekte, aus denen das Hauptprojekt HP besteht anwählen und sie somit für die Weiterverwendung im Rahmen des Teilprojekts auswählen. Der Dialog erlaubt dem Benutzer ebenfalls, einen Ort für die Speicherung des Teilprojekts anzugeben. Nachdem der Benutzer über das Menü oder über den Projektnavigator das auszugliedernde Teilprojekt bzw. die Objekte ausgewählt hat, kann er mit der Split Funktion S das entsprechende Teilprojekt erstellen, was dazu führt, dass die Ursprungsobjekte im Hauptprojekt blockiert werden. Alternativ kann die Blockierung durch einen Benutzer im Hauptprojekt auch überschrieben werden, so dass quasi eine parallele Entwicklung der beiden Teilprojekte möglich ist.

Neben den für das Teilprojekt ausgewählten Objekten 2 können im Rahmen des Systems weitere Objekte in das heraus geteilte Teilprojekt kopiert werden. Dies erfolgt beispielsweise dann, wenn diese Objekte notwendig oder sinnvoll für die Engineering-Arbeit sind. Diese weiteren herauskopierten Objekte sind jedoch read-only Objekte. Sie können im Rahmen des Teilprojekts nicht verändert werden.

Eine Änderung dieser zusätzlichen, in das Teilprojekt kopierten Objekte ist nur dann möglich, wenn dies durch den Benutzer in einem entsprechenden Dialog angegeben wird. Dies ist beispielsweise sinnvoll im Rahmen einer Verdopplung der Teilprojekte und einer Wiederverwendung in einem anderen Projekt, in dem dann das Teilprojekt nicht wieder in das Hauptprojekt eingegliedert wird. In diesem Fall können alle Objekte des Teilprojekts entsprechend geändert werden. Ein Teilprojekt TP kann im Rahmen des erfindungsgemäßen Systems auch in weitere Teilprojekte untergliedert werden. In diesem Fall sind die gleichen Möglichkeiten gegeben, wie für die erste Ausgliederung eines Teilprojekts beschrieben.

Reibungslose Kombination der editierten Teilprojekte in ein Hauptprojekt ist dadurch gewährleistet, dass im Hauptprojekt an den entsprechenden Objekten 3 keine Veränderungen vorgenommen werden konnten. Weiterhin wird die reibungslose Rekombination dadurch gewährleistet, dass im Teilprojekt an den für das Hauptprojekt relevanten Schnittstellen ebenfalls keine Veränderungen vorgenommen werden konnten. Somit ist ein nahtloses Ineinanderfügen der Teilprojekte in das Hauptprojekt und die Integration möglich.

Die Integration erfolgt hierbei durch die Combine Funktion C. Durch die Combine Funktion werden die Teilprojekte wieder miteinander verschmolzen. Dies erfolgt reibungslos, wenn keine grundlegende Strukturveränderung im Rahmen der Teilprojekte TP erfolgt ist. Es kann jedoch vorkommen, dass im Rahmen des Teilprojekts Objekte umbenannt werden oder in andere Ordner eingefügt werden oder auch entfernt werden. Auch das Einfügen neuer Objekte im Rahmen eines Teilprojekts ist möglich. Werden solche Veränderungen im Rahmen der Bearbeitung des Teilprojekts durchgeführt, so werden sie anschließend im Hauptprojekt nach erfolgert Rekombination entsprechend dargestellt. Beispielsweise wird der Name eines Objekts, was im Teilprojekt geändert wurde, im Hauptprojekt, wo es noch existiert, durch die Combine Funktion während des Einfügens gelöscht und durch den neuen Namen ersetzt. Ebenso wird bei Objekten, deren Position verändert wurde, verfahren. Gelöschte Objekte werden im Hauptprojekt einfach gelöscht, während eingefügte Objekte an der entsprechenden Stelle des Hauptprojekts ebenso wieder eingefügt und repräsentierten werden.

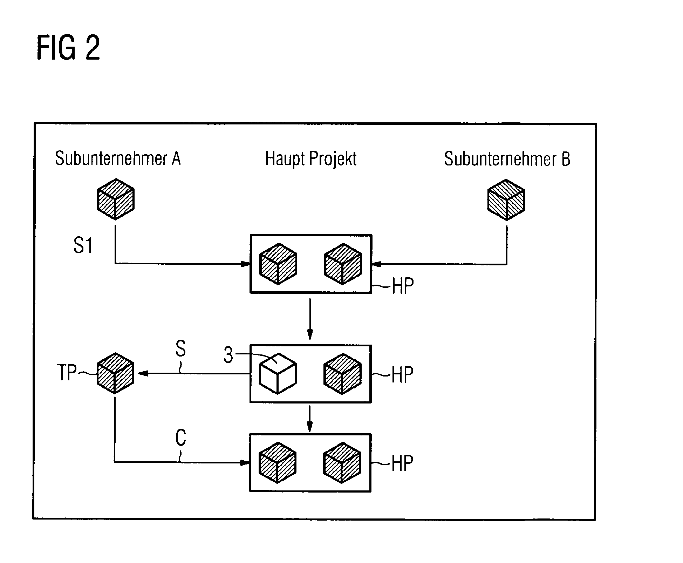

FIG 2 zeigt den Arbeitsablauf eines Projektes, bei dem Subunternehmer unabhängig voneinander Teilprojekte entwickeln. In einem ersten Schritt S1 werden zwei oder mehrere Projekte zu einem Hauptprojekt kombiniert, hierbei hat die Combine Funktion C den Autoren eines Objektes oder eines Unterprojektes beizubehalten. Dies ermöglicht den entsprechenden Autoren oder Subunternehmer seinen Part aus dem Hauptprojekt wieder über die Split Funktion S herauszuschälen. Dies ist notwendig, falls beispielsweise Änderungen an einer Maschine, die von einem Subunternehmer geliefert wird, notwendig sind. Im nächsten Schritt wird durch die Split Funktion S ein Teilprojekt TP aus dem Hauptprojekt herausgeschält. Eine Kopie 3 des Teilprojektes verbleibt hierbei im Hauptprojekt aber die Objekte dieser Kopie sind blockiert, so dass keine Änderungen durchgeführt werden können. Das Teilprojekt TP kann beispielsweise durch den Subunternehmer A bearbeitet werden. Nachdem die Bearbeitung beendet ist, kann das Teilprojekt TP durch die Combine Funktion C in das Hauptprojekt rekombiniert bzw. wieder integriert werden.

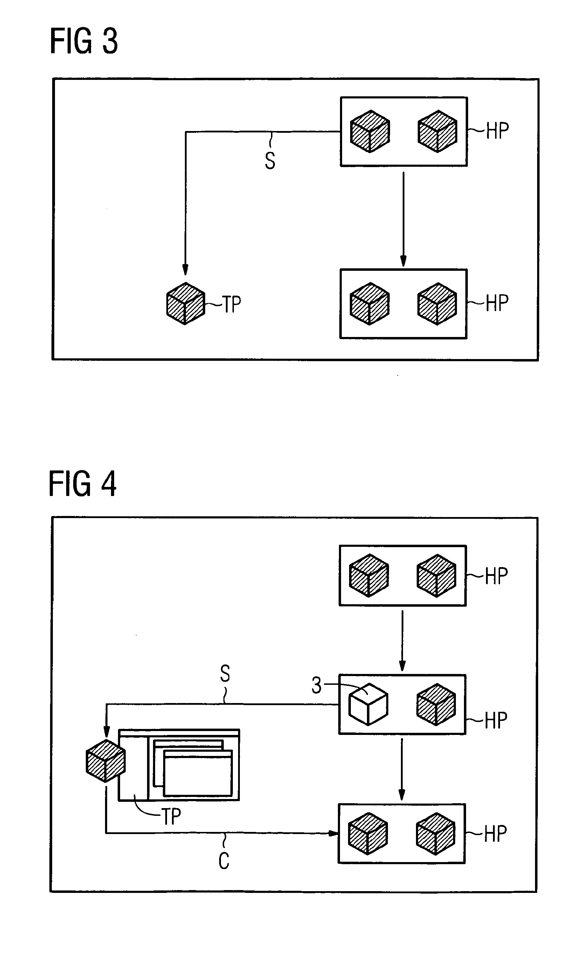

FIG 3 stellt ein Szenario dar, welches die Wiederverwendung bereits entwickelter Automatisierungslösungen bzw. Teile davon ermöglicht. Durch die Split Funktion S kann aus einem Hauptprojekt HP ein Teilprojekt TP herausgeschält werden. Wird bei der Anwendung der Split Funktion vom Benutzer des Systems angegeben, dass die im Hauptprojekt verbleibenden Ursprungsobjekte nicht blockiert werden sollen, so können diese im Hauptprojekt weiterhin geändert werden. Ebenso werden im neu angelegten Teilprojekt die mit dem Teilprojekt zusätzlich kopierten Informationen, beispielsweise Bibliotheken nicht blockiert, so dass auch im Teilprojekt gearbeitet werden kann. Hierdurch wird quasi eine Verdopplung der existierenden Projekte bzw. Lösungen erzielt. Das Teilprojekt kann hierbei im Rahmen eines anderen Projektes dann verwendet werden. Im Umfeld dieses Szenarios ist es nicht möglich, durch die Combine Funktion das Teilprojekt anschließend wieder in das Hauptprojekt einzugliedern, wenn entsprechende Änderungen im Hauptprojekt durchgeführt wurden, so dass die beiden Projekte sich unterschiedlich entwickelt haben und es zu Widersprüchen bei der Rekombination führen würde.

FIG 4 stellt das Szenario eines großen Projektes dar, in dem die Split & Combine Funktion benutzt wird, um die Effektivität des Projekts insgesamt zu erhöhen. Hierbei wird ein normales Hauptprojekt HP bearbeitet. Wenn das Projekt zu groß wird oder auch der Zugang zu einem bestimmten File-Server nicht mehr möglich ist, oder eine autarke Bearbeitung, beispielsweise auf einem mobilen Rechner mit einer entsprechenden Projektierumgebung gewünscht ist, kann ein Benutzer des Systems Teile aus dem Hauptprojekt HP in ein Teilprojekt TP herausschälen und dieses unabhängig von dem Hauptprojekt bearbeiten. Hierbei ist das Teilprojekt TP ebenfalls wieder bearbeitbar, während die Objekte 3 des Teilprojekts TP, welche im Hauptprojekt HP als Ursprungsobjekte verblieben sind, blockiert sind. Dies ermöglicht nach Beendigung der Arbeitung durch die Combine Funktion C wieder die reibungslose Integration des bearbeiteten Teilprojekts in das Hauptprojekt.

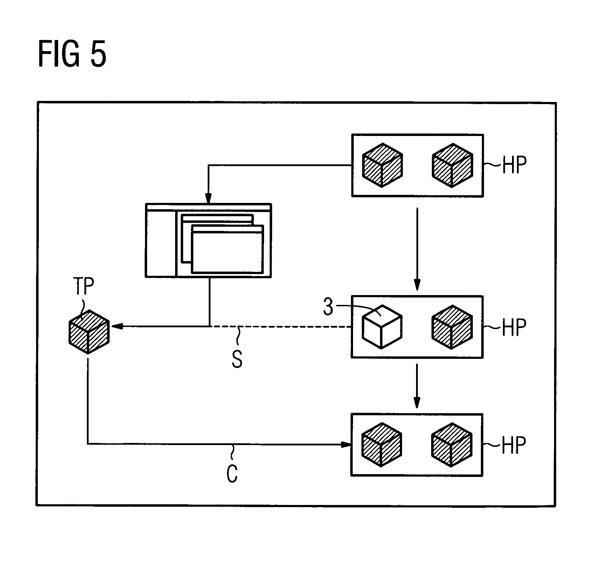

FIG 5 stellt ein Szenario dar, welches den lokalen Test eines Teilprojekts zeigt. Hierbei wird der lokale Test durch dies Split & Combine Funktion unterstützt. Ein Benutzer startet beispielsweise mit der Arbeit an einem normalen Projekt. Hierbei werden Objekte geöffnet und geändert. Bevor die Objekte zum Hauptprojekt HP zurückgegeben und dort gespeichert werden, können sie beispielsweise mithilfe der Split Funktion S aus dem Hauptprojekt herausgeschält werden. Hierbei kann es sich beispielsweise um relativ kleine Einheiten, die herausgeschält werden, handeln. An dem herausgeschälten Teilprojekt bzw. dem Objekt kann unabhängig vom Hauptprojekt gearbeitet werden. Das herausgeschälte Teilprojekt kann unabhängig vom Hauptprojekt ein Testszenario durchlaufen und es können anschließend auf Basis des Tests erkannte Fehler behoben werden. Anschließend kann das getestete und bearbeitete Teilprojekt wieder mit der Combine Funktion C in das Hauptprojekt integriert werden.

## Patentansprüche

1. System zum Bearbeiten von Projekten, insbesondere von Engineering-Projekten im Automatisierungsumfeld, mit
• einem ersten Exemplar einer Projektierumgebung (1₁) zur Bearbeitung eines Projekts (HP), insbesondere eines Hauptprojekts,
• ersten Mitteln (S) zum Erstellen einer Kopie von Objekten (2) aus dem Projekt (HP),
• mindestens einem zweiten Exemplar einer Projektierumgebung (1₂) zur Bearbeitung mindestens eines Teilprojekts (TP), wobei das Teilprojekt (TP) die Kopie der Objekte (2) aus dem Projekt (HP) umfasst und
• zweiten Mitteln (C) zum Wiedereinfügen der im Teilprojekt (TP) bearbeiteten Objekte in das Projekt (HP).

2. System nach Anspruch 1, mit dritten Mitteln zum Blockieren der im Projekt (HP), insbesondere im Hauptprojekt, vorhandenen Ursprungsobjekte (3) der Kopie von Objekten (2) derart, dass die Ursprungsobjekte (3) nicht bearbeitbar sind, solange die Kopie von Objekten (2) nicht wiedereingefügt ist.

3. System nach Anspruch 1 oder 2, bei dem die Mittel zum Erstellen einer Kopie von Objekten (2) zur Bereitstellung einer Auswahl der im Projekt (HP) vorhandenen Objekte vorgesehen sind.

4. System nach Anspruch 3, bei dem eine Liste mit im Projekt (HP) vorhandenen Objekten vorgesehen ist, wobei die für die Kopie (2) benötigten Objekte durch einen Benutzer des Systems festlegbar sind.

5. System nach einem der vorhergehenden Ansprüche, bei dem die ersten Mittel zum Erstellen einer Kopie von Objekten (2) zum Hinzufügen weiterer Objekte und/oder Informationen zu der zu erstellenden Kopie vorgesehen sind.

6. System nach Anspruch 5, wobei die weiteren Objekte und/oder Informationen im Teilprojekt (TP) nicht bearbeitbar sind.

7. System nach Anspruch 5, wobei die weiteren Objekte und/oder Informationen im Teilprojekt (TP) bearbeitbar sind.

8. System nach einem der vorhergehenden Ansprüche, wobei ein bearbeitbares Teilprojekt (TP) zur Erzeugung eines weiteren Teilprojektes (TTP) vorgesehen ist.

9. Verfahren zum Bearbeiten von Projekten, insbesondere von Engineering-Projekten im Automatisierungsumfeld, wobei
• ein Projekt (HP), insbesondere ein Hauptprojekt, in einem ersten Exemplar einer Projektierumgebung (1₁) bearbeitet wird,
• (mindestens) eine Kopie von Objekten (2) aus dem Projekt (HP) erstellt wird,
• mindestens eines Teilprojekts (TP) in mindestens einem zweiten Exemplar einer Projektierumgebung (1₂) bearbeitet wird, wobei das Teilprojekt (TP) die Kopie der Objekte (2) aus dem Projekt (HP) umfasst und
• die im Teilprojekt (TP) bearbeiteten Objekte in das Projekt (HP) wiedereingefügt werden.

10. Verfahren nach Anspruch 9, wobei die im Projekt (HP), insbesondere im Hauptprojekt, vorhandenen Ursprungsobjekte (3) der Kopie von Objekten (2) nicht zur Bearbeitung freigegeben sind, solange die Kopie von Objekten (2) nicht wiedereingefügt ist.

11. Verfahren nach Anspruch 9 oder 10, wobei eine Auswahl der im Projekt (HP) vorhandenen Objekte bereitgestellt wird.

12. Verfahren nach Anspruch 11, wobei die für die Kopie (2) benötigten Objekte durch einen Benutzer des Systems aus einer Liste mit im Projekt (HP) vorhandenen Objekten festgelegt werden.

13. Verfahren nach einem der Ansprüche 9 bis 12, wobei der zu erstellenden Kopie von Objekten (2) weitere Objekte und/oder Informationen hinzugefügt werden.

14. Verfahren nach Anspruch 13, wobei die weiteren Objekte und/oder Informationen im Teilprojekt (TP) nicht zur Bearbeitung freigegeben sind.

15. Verfahren nach Anspruch 13, wobei die weiteren Objekte und/oder Informationen im Teilprojekt (TP) zur Bearbeitung freigegeben sind.

16. Verfahren nach einem der Ansprüche 9 bis 15, wobei ein weiteres Teilprojektes (TTP) aus einem bearbeitbaren Teilprojekt (TP) erzeugt werden kann.
